# EUROPÄISCHE PATENTANMELDUNG

(11) **EP 1 350 761 A1**
(43) Veröffentlichungstag der Anmeldung: **08.10.2003**
(21) Anmeldenummer: 02007120.5
(22) Anmeldetag: 28.03.2002
(51) Int. Cl.: C01B 15/023, B01J 23/96

(54) **Verfahren zur Herstellung von Wasserstoffperoxid**

(71) Anmelder: Degussa AG, 40474 Düsseldorf (DE)
(72) Erfinder: Jäger, Bernd, Dr., 64297 Darmstadt (DE); Haas, Thomas, Dr., 60322 Frankfurt (DE); Glenneberg, Jürgen, Dr., 63065 Offenbach (DE); Grunert, Jürgen, 63579 Freigericht (DE)

(57) **Zusammenfassung**

Die Erfindung betrifft ein Verfahren zur Herstellung von Wasserstoffperoxid nach dem Anthrachinonprozess, umfassend eine Hydrierstufe, eine Oxidationsstufe und eine Extraktionsstufe. Erfindungsgemäß wird die katalytische Hydrierung der in einer Arbeitslösung gelösten Anthrachinonderivate in Gegenwart von zugesetztem molekularen Sauerstoff durchgefürt. Pro Mol Wasserstoff werden bevorzugt 0,1 bis 10 mMol Sauerstoff mit dem Hydriergas, im Gemisch mit einem Inertgas und/oder in der Arbeitslösung gelöst und/oder dispergiert in die Hydrierstufe eingebracht. Hierdurch lässt sich die Standzeit des Katalysators erhöhen.

## Beschreibung

Die Erfindung richtet sich auf ein Verfahren zur Herstellung von Wasserstoffperoxid nach dem Anthrachinonprozess durch alternierende Reduktion und Oxidation einer ein oder mehrere Anthrachinonderivate enthaltenden Arbeitslösung. Die Erfindung führt zu einer Verbesserung der Katalysatorstandzeit in der Hydrierstufe.

Es ist bekannt, Wasserstoffperoxid nach dem sogenannten Anthrachinonverfahren herzustellen. Dieser Prozess basiert auf der alternierenden Hydrierung und Oxidation von Anthrachinonderivaten, üblicherweise 2-Alkylanthrachinonen und
2-Alkyltetrahydroanthrachinonen, wobei die Alkylgruppe linear oder verzweigt sein kann und im allgemeinen 2 bis 6 Kohlenstoffatome aufweist. Die genannten Anthrachinonderivate sowie die in der Hydrierstufe erhaltenen Anthrahydrochinonderivate werden nachfolgend allgemein als Reaktionsträger bezeichnet. Diese Reaktionsträger sind im Anthrachinonverfahren in einem organischen Lösungsmittelsystem gelöst, und die Lösung wird als Arbeitslösung bezeichnet. Vielfach enthält die Arbeitslösung zwei unterschiedliche 2-Alkylanthrachinone und deren Tetrahydroderivate.

In der Hydrierstufe des Anthrachinonprozesses werden die in der Arbeitslösung enthaltenen Alkylanthrachinone und Alkyltetrahydroanthrachinone zumindest teilweise mit Wasserstoff oder einem Wasserstoff enthaltenden Gas in Gegenwart eines Katalysators in die entsprechenden Alkylanthrahydrochinone bzw. Alkyltetrahydroanthrachinone überführt. Die Hydrierung der Arbeilslösung wird in Gegenwart eines Suspensionskatalysators, insbesondere eines edelmetallhaltigen

Suspensionskatalysators, durchgeführt. Alternativ hierzu ist es auch bekannt, die Hydrierung der Arbeitslösung in Gegenwart eines in einem Hydrierreaktor angeordneten Festbettkatalysators durchzuführen.

Die vom Katalysator befreite hydrierte Arbeitslösung wird anschliessend mit einem sauerstoffhaltigen Gas, üblicher Weise mit Luft, behandelt, wobei die Alkylanthrachinone bzw. Alkyltetrahydroanthrachinone zurückgebildet werden und gleichzeitig Wasserstoffperoxid entsteht.

Aus der oxidierten Arbeitslösung wird anschließend Wasserstoffperoxid isoliert. Meistens handelt es sich hierbei um einen Extraktionsschritt, wobei Wasserstoffperoxid mit einer wässrigen Lösung extrahiert und diese Lösung anschliessend gereinigt und konzentriert wird. Die Arbeitslösung wird wieder der Hydrierstufe zugeführt. Das Anthrachinonverfahren umfasst in der Regel auch Prozessstufen aus der Reihe Regenerierung der Arbeitslösung und Regenerierung des Katalysators. Einen Überblick über das Anthrachinonverfahren zur Herstellung von Wasserstoffperoxid und unterschiedliche Ausführungsformen einzelner Stufen vermittelt Ullmann's Encyclopedia of Ind. Chem., 5^{th} ed., Vol. A 13, S. 447-456.

Für die Wirtschaftlichkeit des Anthrachinonverfahrens ist von entscheidender Bedeutung, welche Aktivität, Produktivität und Standzeit der Hydrierkatalysator aufweist und mit welcher Selektivität er die Anthrachinonderivate hydriert.

Bei einer Verwendung von Suspensionskatalysatoren, wie beispielsweise Palladiummohr oder geträgerten Palladiumkatalysatoren, wird der Katalysatordesaktivierung in der Hydrierstufe dadurch Rechnung getragen, dass periodisch oder kontinuierlich ein Teil des Katalysators von der Arbeitslösung abgetrennt, ausserhalb des eigentlichen Verfahrens regeneriert und dann der Hydrierstufe wieder zugeführt wird. Diese Katalysatorabtrennung sowie die externe Regenerierung sind zwar technisch aufwendig, jedoch kommt es zu keiner Kapazitätsminderung durch Anlagenstillstände zwecks Katalysatorregenerierung.

Bekannt ist auch die Verwendung von Festbettkatalysatoren in der Hydrierstufe:

Im Verfahren gemäß US-Patent 3,009,782 wird in der Hydrierstufe ein Festbett mit trägergebundenen Katalysatorpartikeln verwendet, wodurch weniger Nebenprodukte gebildet werden und damit die Selektivität erhöht wird.

Der in der Hydrierstufe des Verfahrens gemäß US-Patent 4552748 eingesetzte monolithische bienenwabenförmige Festbettkatalysator und der gemäß US-Patent 5,071,634 eingesetzte mit Katalysator beschichtete statische Mischer führen zwar zu einer akzeptablen Katalysatorstandzeit, jedoch muß auch hier der Festbettreaktor periodisch regeneriert werden, um die Aktivität wieder zu steigern.

Schließlich wird im Verfahren gemäß DE 19953185 die Katalysatorstandzeit eines mit einem teilchenförmigen Katalysator befüllten Festbettreaktors dadurch erhöht, dass der Festbettreaktor als Aufstrom-Blasensäule betrieben wird.

Ein Nachteil all der zuvor beispielhaft genannten Varianten der Festbetthydrierung ist, dass trotz verbesserter Katalysatorstandzeit periodisch eine Regenerierung des desaktivierten Katalysators erforderlich ist. Eine Regenerierung oder Aufarbeitung des Katalysators erfolgt entweder unter Entnahme des Katalysators aus dem Reaktor zur externen Bearbeitung oder, nicht minder aufwendig, durch Abstellung des Reaktors und Regenerierung des desaktivierten Katalysators ohne Entnahme. Eine Unterbrechung des Produktionsbetriebs zwecks Regenerierung läßt sich umgehen, wenn mehrere Hydrierreaktoren installiert werden, wovon alternierend einer der Hydrierung und ein weiterer der Regenerierung dient. Die Investitionskosten eines solchen Produktionsbetriebs werden dadurch aber erhöht und die Wirtschaftlichkeit gemindert.

Es wurde versucht, das Problem der begrenzten Katalysatorstandzeit durch die Auswahl spezieller Katalysatorrezepturen mit einer geringeren Desaktivierungsrate zu mindern. So beschreibt das US-Patent 4800075 die Verwendung eines Katalysators aus Palladium auf einem alpha Aluminiumoxid-Träger mit einer BET Oberfläche von 5 - 108 m2/g und die DE-OS 19713376 die Verwendung eines Katalysators aus Palladium auf einem Silica Träger mit einem mittleren Porendurchmesser von 80-400 Angström. In einer technischen Produktionsanlage sind aber auch in diesen Fällen Maßnahmen zur Regenerierung des Katalysators vorzusehen.

Gemäß EP 0778085 A1 läßt sich eine Regenerierung und Aktivierung eines Hydrierkatalysators durch Behandlung des Katalysators mit einer Säure bewirken. Diese Regenerierung erfolgt aber extern oder erfordert eine Betriebsunterbrechung und führt zusätzlich zu einem Einsatz einer artfremden Chemikalie.

Auch im Verfahren gemäß EP 0670182 A1, wonach zur Regenerierung der desaktivierte Hydrierkatalysator im Hydrierreaktor mit oxidierter Arbeitslösung mehrere Stunden kontaktiert wird, muss die Wasserstoffzufuhr und damit die Hydrierung unterbrochen werden.

Im Verfahren gemäß US-Patent 3,004,831 wird der desaktivierte Katalysator dadurch regeneriert, dass periodisch der Wasserstoffdruck in der Hydrierstufe reduziert und über eine ausreichend lange Zeit ein Inertgas durch den Reaktor geleitet wird. Dieses Verfahren erfordert demnach eine Betriebsunterbrechung

Lediglich im Verfahren gemäß DE-Offenlegungsschrift 20 42 523 lässt sich die Selektivität und Aktivität des Hydrierkatalysators ohne Unterbrechung der Hydrierreaktion über eine längere Zeit aufrecht erhalten, indem eine in situ Regenerierung dadurch erfolgt, dass die zu hydrierende Arbeitslösung einen Gehalt an reaktionsfähigem Wasserstoffperoxid von mindestens 250 mg/l, insbesondere 300 bis 1000 mg H₂O₂ /l enthält. Die erforderliche Einsatzmenge an Wasserstoffperoxid lässt sich durch unvollständige Extraktion der oxidierten Arbeitslösung oder durch Zugabe einer entsprechenden Menge oxidierter Arbeitslösung zu vollständig extrahierter Arbeitslösung einstellen. Nachteilig an diesem Verfahren ist, dass durch die Einspeisung eines Teils des zuvor gebildeten Wasserstoffperoxids in die Hydrierstufe die Ausbeute abnimmt.

Aufgabe der vorliegenden Erfindung ist demgemäß, ein weiteres Verfahren zur Durchführung der Hydrierstufe im Anthrachinonverfahren zur Herstellung von Wasserstoffperoxid aufzuzeigen, wodurch die Katalysatorstandzeit erhöht werden kann, ohne die Hydrierung abstellen und ohne bereits gebildetes Wasserstoffperoxid einsetzen zu müssen.

Gemäß einer weiteren Aufgabe sollte das Verfahren in einfacher Weise durchführbar sein und keine artfremden Hilfsstoffe erfordern.

Gemäß einer weiteren Aufgabe sollte die Katalysatorstandzeit insbesondere in Festbettreaktoren, darunter in einem Rieselbettreaktor oder in einem Blasensäulenreaktor erhöht werden, weil bei diesen Ausführungsformen die Wirksamkeit von mit der Arbeitslösung eingetragenem Wasserstoffperoxid offensichtlich nicht den gesamten Bereich des Reaktors erfasst.

Die zuvor genannten sowie weitere Aufgaben, wie sie sich aus der nachfolgenden Beschreibung ergeben, lassen sich durch das erfindungsgemässe Verfahren, wonach die Hydrierung der Arbeitslösung in Gegenwart einer geringen Menge an zugesetztem elementaren Sauerstoff durchgeführt wird.

Gefunden wurde ein Verfahren zur Herstellung von Wasserstoffperoxid nach dem Anthrachinonprozess, umfassend eine Hydrierstufe, wobei in einer Arbeitslösung enthaltene Anthrachinonderivate mit einem Wasserstoff enthaltenden Gas in Gegenwart eines Hydrierkatalysators hydriert werden, eine Oxidationsstufe, wobei in der Hydrierstufe gebildete Anthrahydrochinonderivate mit einem Sauerstoff enthaltenden Gas, insbesondere Luft, unter Bildung von Wasserstoffperoxid wieder in die Anthrachinonderivate überführt werden, Isolierung des Wasserstoffperoxids aus der oxidierten Arbeitslösung und Rückführung der Arbeitslösung in die Hydrierstufe, das dadurch gekennzeichnet ist, dass die Hydrierung in Gegenwart von zugesetztem molekularen Sauerstoff (O₂), dessen Menge mindestens 0,02 mMol O₂ pro Mol H₂ beträgt und unter den Hydrierbedingungen unter der Explosionsgrenze liegt und der in Form eines Sauerstoff enthaltenden Gases in die Hydrierstufe eingebracht wurde, durchgeführt wird. Die Unteransprüche richten sich auf bevorzugte Ausführungsformen des erfindungsgemäßen Verfahrens.

Molekularer Sauerstoff oder vorzugsweise Luft wird an einer oder mehreren Stellen in den Hydrierreaktor eingespeist, entweder unmittelbar oder zusammen mit dem Wasserstoff enthaltenden Hydriergas oder/und im Gemisch mit einem Inertgas, wie weiterem Stickstoff, und/oder mit einer zuvor mit Sauerstoff beladenen zu hydrierenden Arbeitslösung. Letztere ist durch Kontaktieren der extrahierten Arbeitslösung mit Luft oder Sauerstoff erhältlich. Bei der Zudosierung von Sauerstoff oder Luft in das Hydriergas oder in den Hydrierreaktor muss sichergestellt werden, dass auch lokal keine kritischen Explosionsbereiche durchlaufen werden. Durch entsprechende Betriebsweise einer Reinigung von zuvor erzeugtem Wasserstoff kann die erfindungsgemäß erforderliche Menge Sauerstoff in den Wasserstoff eingebracht werden. Die Obergrenze des Sauerstoffgehalts wird ausschliesslich durch sicherheitstechnische Vorgaben (Explosionsgrenze) determiniert; die Mindestmenge wird so bemessen, dass eine wirksame Steigerung der Katalysatorstandzeit resultiert. Durch Anwendung der erfindungsgemäße Maßnahme wird überraschenderweise die Standzeit des Katalysators nennenswert gesteigert.

Die Einsatzmenge an Sauerstoff beträgt mindestens 0,02 Mol O₂ / Mol H₂ und liegt vorzugsweise im Bereich von 0,1 bis 20 mMol O₂ pro Mol Wasserstoff, jedoch können diese Grenzwerte auch unter- oder Überschritten werden. Besonders bevorzugt liegt die Einsatzmenge im Bereich von 0,5 bis 10 mMol O₂ pro Mol Wasserstoff. Sofern das Hydriergas im wesentlichen aus Wasserstoff besteht und der Sauerstoff im Gemisch mit dem Wasserstoff in den Hydrierreaktor eingebracht wird, enthält dieses Gemisch vorzugsweise 100 bis 20.000 vpm O₂ (vpm = Volumteile per Million ). Sofern Sauerstoff mit der zu hydrierenden Arbeitslösung in den Hydrierreaktor eingebracht wird, kann der Sauerstoff darin gelöst und/oder fein dispergiert vorliegen.

Die in den Hydrierreaktor eingespeiste Arbeitslösung kann in Abhängigkeit von der Zusammensetzung der Arbeitslösung, den Extraktionsbedingungen und einer Nachbehandlung, wie eine Trocknung unter vermindertem Druck, noch eine geringe Menge Wasserstoffperoxid enthalten. Es wird angenommen, dass dieses Wasserstoffperoxid in Gegenwart des Hydrierkatalysators zu Wasser und Sauerstoff zersetzt werden kann und zusätzlich einen gewissen Effekt bezüglich Standzeiterhöhung des Katalysators ausübt. Durch den erfindungsgemäßen Zusatz von elementarem Sauerstoff, also nicht aus in der Arbeitslösung noch enthaltenem Wasserstoffperoxid stammt, wird die Katalysatorstandzeit aber weiter verbessert. Dieser Effekt wird besonders deutlich, wenn der Hydrierreaktor als Festbett aus einem teilchenförmigen Katalysator ausgebildet ist und der Reaktor als Blasensäule oder als Rieselbett betrieben wird.

Obgleich R.Willstätter et al. in Chemische Berichte 54B, 113-123, (1921) darüber berichteten, dass die katalytische Hydrierung von Anhydriden, aromatischen Säuren und Zimtsäureestern unter Einsatz eines Platin- oder Palladiumkatalysators in Gegenwart von Sauerstoff beschleunigt wird, wurde bei dem Anthrachinonverfahren zur Herstellung von Wasserstoffperoxid bisher überraschenderweise nie Sauerstoff in die Hydrierstufe eingespeist.

Im erfindungsgemässen Verfahren lassen sich die bekannten Reaktionsträger, Katalysatoren und Verfahrensvarianten der Hydrierung sowie die bekannten Lösungsmittel für die Arbeitslösung verwenden.

Besonders geeignete Reaktionsträger sind 2-Alkylanthrachinone und deren kernhydrierte 2-Alkyl.tetrahydroanthrachinone; wobei die Alkylgruppe zwei bis sechs Kohlenstoffatome aufweist und linear oder verzweigt sein kann. Vorzugsweise wird eine Kombination, enthaltend 2-Ethylanthrachinon und ein C₄-bis C₆-Alkylanthrachinon sowie deren Tetrahydroderivate als Reaktionsträger verwendet. Die Arbeitslösung enthält ein oder mehrere Lösungsmittel, welche einerseits eine gute Löslichkeit für die Anthrachinonderivate und andererseits für die Anthrahydrochinonderivate aufweisen.

Im erfindungsgemäßen Verfahren können die im Anthrachinonprozess üblichen Katalysatoren eingesetzt werden. Vorzugsweise handelt es sich um edelmetallhaltige Katalysatoren, insbesondere palladiumhaltige Katalysatoren. Die katalytisch wirksame Komponente kann in freier oder in geträgerter Form vorliegen, oder ist Bestandteil einer Beschichtung auf einem Bienenwabenreaktor oder auf einem statischen Mischer.

Die Hydrierung wird bezüglich Temperatur und Druck sowie Strömungsverhältnissen und damit Kontaktzeit im Reaktor in an sich bekannter Weise durchgeführt. Die Temperatur liegt meistens im Bereich von 10 bis 100 °C, insbesondere 40 bis 80°C, der Druck im Bereich von 0,01 bis 2 MPa, insbesondere 0,1 bis 0,7 MPa. Die Hydrierung kann in bekannten Reaktoren für eine Suspensionshydrierung oder Festbetthydrierung durchgeführt werden.

Gemäss einer bevorzugten Ausführungsform werden der Reaktor so dimensioniert und die Hydrierbedingungen so eingestellt, dass der dem Reaktor zugeführte Wasserstoff bei seinem Weg durch den Reaktor vollständig aufgebraucht wird.

Vorteile des erfindungsgemäßen Verfahrens sind, dass die Standzeit des Katalysators gegenüber der vorbekannten Betriebsweise signifikant erhöht wird, dass es keiner aufwendigen Konstruktion des Hydrierreaktors bedarf, das Verfahren sich sowohl auf eine Festbett- als auch Suspensionshydrierung anwenden lässt, wobei die Anwendung bei einer Festbetthydrierung besonders vorteilhaft ist, und die Hydrierstufe nicht an eine bestimmte Zusammensetzung der Arbeitslöung und/oder des Hydrierkatalysators gebunden ist.

Anhand der nachfolgenden Beispiele (B) und Vergleichsbeispiele (VB) wird die Erfindung weiter verdeutlicht.

### Beispiele

Die Hydrierung wurde kontinuierlich in einem Reaktionsrohr mit 5 ml Katalysatorschüttvolumen durchgeführt. Der Reaktordurchmesser betrug 10 mm. Die Anlage bestand aus einer Flüssigkeitsvorlage, dem Reaktor und einem Flüssigkeitsabscheider. Die Reaktionstemperatur wurde über einen Wärmeträger-Öl-Kreislauf eingestellt. Druck und Wasserstoffstrom wurden elektronisch geregelt. Die Arbeitslösung wurde einem Wasserstoffstrom mit einer Pumpe zudosiert und das Gemisch am Kopf des Reaktors (Rieselbett-Fahrweise) aufgegeben. Nach Durchlaufen des Reaktors wurde das Produkt in regelmässigen Abständen aus dem Abscheider entnommen.

Die Arbeitslösung, welche aus einem Anthrachinon-Kreisprozess nach der Extraktionsstufe entnommen wurde, enthielt als Lösungsmittel Alkylaromaten und Tetrabutylharnstoff und als Reaktionsträger ein Gemisch aus 2- Alkylanthrachinonen und deren 2-Alkyltetrahydroanthrachinonen im Molverhältnis von 1: 3,2.

Der Reaktorüberdruck betrug in den Beispielen und Vergleichsbeispielen jeweils 0,2 MPa. Die Flüssigkeitsbelastung LHSV betrug in allen Fällen 10 h⁻¹ und die Reaktortemperatur 76 °C. Der dem Reaktor zugeführte, den Wasserstoff enthaltende Gasstrom betrug in allen Fällen 4 Nl/h.

In den Vergleichsbeispielen VB 1.1 bis VB 1.5 wurde als Hydriergas Wasserstoff, der laut Herstellerangaben Sauerstoff im Bereich < 10 vpm enthielt, eingesetzt. In den erfindungsgemäßen Beispielen B 1.1 bis B 1.5 wurde Wasserstoff, der auf einen Sauerstoffgehalt von 3000 vpm angereichert wurde, eingesetzt.

Als Katalysator wurde ein Trägerkatalysator eingesetzt, nämlich Palladium auf SiO₂ (Aerolyst, Fa. Degussa). Die Korngrössenverteilung des granulatartigen Trägerkatalysators betrug 1,0 - 1,4 mm.

Für die Beladung des Trägers wurde eine wässrige Palladiumnitrat-Lösung eingesetzt. 50 g des Trägermaterials wurden in einem Dragierkessel vorgelegt und im rotierenden Kessel mit einer Lösung aus 200 g Wasser und 270 mg Palladium-Nitrat übergossen. Der beschichtete Träger wurde 12 h an Luft bei 170 °C getrocknet. Anschliessend wurde der Katalysator im Reaktor bei 100 °C 2 h mit Wasserstoff (< 10 vpm O₂ )reduziert.

Die nachfolgende Tabelle 1 zeigt die Ergebnisse der erfindungsgemässen Beispiele B 1.1 bis B 1.5 sowie der Vergleichsbeispiele VB 1.1 bis VB 1.5. Angegeben wurde das H₂O₂-Äquivalent als Maß für die Hydrierung in Abhängigkeit von der Betriebsdauer.

**Tabelle**

| Nr. | Betriebszeit [h] | H₂O₂-Äquivalent [g/l] |
|---|---|---|
| VB 1.1 | 1 | 9,1 |
| VB 1.2 | 21 | 4,3 |
| VB 1.3 | 43 | 2,2 |
| VB 1.4 | 120 | 0,7 |
| VB 1.5 | 146 | 0,5 |
| B 1.1 | 2 | 7,9 |
| B 1.2 | 23 | 5,8 |
| B 1.3 | 42 | 4,9 |
| B 1.4 | 119 | 3,8 |
| B 1.5 | 145 | 3,6 |

Die Versuche zeigen, dass bei erfindungsgemässer Ausführungsform bei der gewählten Betriebszeit das H₂O₂-Äquivalent nach einem anfänglichen Aktivitätsverlust nahezu konstant bleibt. Bei der vorbekannten Ausführungsform, also der Hydrierung in Abwesenheit einer erfindungsgemäß wirksamen Menge an Sauerstoff, ist der Aktivitätsverlust um ein Vielfaches höher, und es wird kein konstanter Wert erreicht, sondern der Aktivitätsverlust schreitet fort bis zur vollständigen Desaktivierung.

### Vergleichsbeispiele 2.1 bis 2.5

Diese Beispiele wurden analog dem Vergleichsbeispiel 1 durchgeführt, jedoch wurde die extrahierte Arbeitslösung vor der Hydrierstufe mit einer nicht-extrahierten oxidierten Arbeitslösung derart versetzt, dass das Gemisch ein H₂O₂-Äquivalent im Bereich von 0,5 bis 0,3 g/l aufwies. Die Ergebnisse folgen aus der Tabelle 2.

**Tabelle 2:**

| Nr. | Betriebszeit [h] | H₂O₂-Äquivalent in der Vorlage [g/l] | H₂O₂-Äquivalent nach der Hydrierung [g/l] |
|---|---|---|---|
| VB 2.1 | 1 | 0,5 | 9,7 |
| VB 2.2 | 23 | 0,5 | 7,7 |
| VB 2.3 | 47 | 0,4 | 6,3 |
| VB 2.4 | 119 | 0,5 | 3,5 |
| VB 2.5 | 143 | 0,3 | 2,8 |

Diese Vergleichsbeispiele zeigen, dass ein Zusatz von H₂O₂ in die zu hydrierende Arbeitslösung zwar auch zu einer Standzeitverbesserung des Katalysators führt, der Effekt ist aber deutlich geringer, als der gemäß dem erfindungsgemäßen Verfahren erhältliche Effekt und zu dem wird im vorbekannten Verfahren bereits gebildetes H₂O₂ wieder verbraucht.

## Patentansprüche

1. Verfahren zur Herstellung von Wasserstoffperoxid nach dem Anthrachinonprozess, umfassend eine Hydrierstufe, wobei in einer Arbeitslösung enthaltene Anthrachinonderivate mit einem Wasserstoff enthaltenden Gas in Gegenwart eines Hydrierkatalysators hydriert werden, eine Oxidationsstufe, wobei in der Hydrierstufe gebildete Anthrahydrochinonderivate mit einem Sauerstoff enthaltenden Gas, insbesondere Luft, unter Bildung von Wasserstoffperoxid wieder in die Anthrachinonderivate überführt werden, Isolierung des Wasserstoffperoxids aus der oxidierten Arbeitslösung und Rückführung der Arbeitslösung in die Hydrierstufe,
das **dadurch gekennzeichnet,**
**dass** man die Hydrierung in Gegenwart von zugesetztem molekularem Sauerstoff (O₂), dessen Menge mindestens 0,02 mMol O₂ pro Mol H₂ beträgt und unter den Hydrierbedingungen unter der Explosionsgrenze liegt und der in Form eines Sauerstoff enthaltenden Gases in die Hydrierstufe eingebracht wurde, durchführt .

2. Verfahren nach Anspruch 1,
**dadurch gekennzeichnet,**
**dass** man molekularen Sauerstoff oder Luft allein oder im Gemisch mit dem Wasserstoff enthaltenden Hydriergas oder einem Inertgas an einer oder an mehreren Stellen in den Hydrierreaktor einleitet.

3. Verfahren nach Anspruch 1 oder 2,
**dadurch gekennzeichnet,**
**dass** man die Arbeitslösung der aus der Extraktionsstufe vor Eintritt in den Hydrierreaktor mit molekularem Sauerstoff oder mit Luft kontaktiert und dabei den Sauerstoff in der Arbeitslösung löst und/oder dispergiert.

4. Verfahren nach einem der Ansprüche 1 bis 3,
**dadurch gekennzeichnet,**
**dass** man pro Mol Wasserstoff 0,1 bis 20 mMol, insbesondere 0,5 bis 10 mMol molekularen Sauerstoff oder eine entsprechende Menge eines Sauerstoff enthaltenden Inertgasgemischs, insbesondere Luft, in den Hydrierreaktor einpeist.

5. Verfahren nach einem der Ansprüche 1 bis 4,
**dadurch gekennzeichnet,**
**dass** man als Hydriergas ein Wasserstoff enthaltendes Gas mit einem Sauerstoffgehalt von 100 vpm bis 5000 vpm einsetzt.

6. Verfahren nach einem der Ansprüche 1 bis 5,
**dadurch gekennzeichnet,**
**dass** man die Hydrierung in einem Festbettreaktor mit einer Flüssigkeitsbelastung LHSV (liquid hourly space velocity) von 0,1 h⁻¹ bis 20 h⁻¹ betreibt.

7. Verfahren nach einem der Ansprüche 1 bis 6,
**dadurch gekennzeichnet,**
**dass** man einen edelmetallhaltigen, insbesondere palladiumhaltigen Festbettkatalysator aus Partikeln mit einem mittleren Durchmesser von 0,5 bis 20 mm verwendet.

8. Verfahren nach Anspruch 6 oder 7,
**dadurch gekennzeichnet,**
**dass** man den Festbettreaktor als Rieselbett betreibt.
